# EUROPÄISCHE PATENTANMELDUNG

(11) **EP 0 952 561 A2**
(43) Veröffentlichungstag der Anmeldung: **27.10.1999**
(21) Anmeldenummer: 99250115.5
(22) Anmeldetag: 13.04.1999
(51) Int. Cl.: G07F 7/02, G07F 13/02

(54) **Verfahren zur Identifikation von Waren von einem Warenanbieter entgegennehmenden Warenabnehmers mit einem Endgerät und zur Identifikation des Warenanbieters, Endgerät und Zentrale**

(30) Priorität: 23.04.1998 DE 19818911
(71) Anmelder: MANNESMANN Aktiengesellschaft, 40213 Düsseldorf (DE)
(72) Erfinder: Siegert, Claus, Dipl.-Ing, 91126 Schwabach (DE)
(74) Vertreter: Henze, Lothar

(57) **Zusammenfassung**

Durch ein Verfahren zur Identifikation eines Waren von einem Warenanbieter (5) entgegennehmenden Warenabnehmers (1) mit einem Endgerät (8) und zur Identifikation des Warenanbieters (5),
wobei über einen Kommunikationskanal (10) vom Endgerät (8) an eine Zentrale (9) zumindest eine Warenabnehmer-ldentifikation (1) betreffende Warenabnehmer-ldentifikations-Daten und eine Warenanbieter-ldentifikation (5) betreffende Warenanbieter-ldentifikations-Daten übermittelt werden,
wobei die Warenabnehmer-ldentifkations-Daten in einer Zentrale (9) geprüft werden und
wobei die Warenabnehmer-ldentifikations-Daten und die entgegengenommenen oder unmittelbar hierauf entgegenzunehmenden Waren betreffende Warendaten in der Zentrale einander zugeordnet werden,
ein Endgerät und eine Zentrale wird die Identifikation eines Warenabnehmers und Warenanbieters, insbesondere eines tankenden Fahrzeuges an einer Tankstelle, effizienter.

## Beschreibung

Die Erfindung betrifft ein Verfahren zur Identifikation eines Waren von einem Warenanbieter entgegennehmenden Warenabnehmers mit einem Endgerät und zur Identifikation des Warenanbieters, ein Endgerät und eine Zentrale.

Neben der Möglichkeit der Barzahlung existiert an Tankstellen die Möglichkeit der Bezahlung mit einer EC-Karte oder einer Karte einer Tankstellenkette. Hierbei ist es erforderlich, daß der Warenabnehmer des Kfz-Treibstoffs, also Benzins oder Diesels, mit seiner Karte den Kassenraum der Tankstelle aufsucht und dort mit der Karte bezahlt durch Einlesen der Karte, Eingabe eines Codes und durch Eingabe von Warendaten, also Daten über die abgenommene Warenmenge oder deren Gesamtpreis durch den Warenanbieter, also durch Personal in der Tankstelle.

Aufgabe der Erfindung ist die Schaffung eines möglichst einfachen und effizienten Verfahrens zur Identifikation eines Warenanbieters und eines Warenabnehmers zum Ermöglichen des Abrechnens von vom Warenabnehmer entgegengenommenen oder unmittelbar hierauf entgegenzunehmenden Waren. Diese Aufgabe wird durch die Gegenstände der unabhängigen Ansprüche gelöst.

Die Erfindung ermöglicht das Bezahlen von Waren, insbesondere das Bezahlen von bereits abgenommenem Treibstoff an einer Tankstelle ohne Aufsuchen des Kassenraums. Überdies werden erfindungsgemäß potentielle Fehler durch falsche Zuordnung der abgenommenen Waren, also insbesondere durch falsche manuelle Eingabe der Nummer der Zapfsäule, von welcher ein bestimmter Warenabnehmer getankt hat, vermieden.

Der Warenanbieter kann insbesondere eine Tankstelle oder ein dortiges Endgerät sein; die Ware kann insbesondere gerade abgenommener Kfz-Treibstoff oder eventuell auch unmittelbar nach der Identifikation abzunehmender Kfz-Treibstoff sein; der Warenabnehmer kann insbesondere ein Fahrzeug oder Halter eines Fahrzeuges sein. Die Warenabnehmer-ldentifikation kann insbesondere das Endgerät und/oder das Kraftfahrzeug, in welchem sich das Endgerät befindet und/oder den Halter identifizieren. Entsprechend kann die Warenanbieter-ldentifikation den Inhaber einer Tankstelle und/oder eine Tankstelle identifizieren. Der Kommunikationskanal zwischen dem Endgerät des Warenabnehmers und der Zentrale kann insbesondere Mobilfunk, insbesondere nach GSM-Standard, insbesondere ein Kurznachrichtenkanal (GSM-SMS) sein. Warendaten betreffen insbesondere die Menge und/oder Art und/oder den Gesamtpreis der Waren, also beispielsweise 50 1 Superbenzin und/oder 90,-- DM. Ein Endgerät kann insbesondere in einem Kraftfahrzeug eines Warenabnehmers eingebaut oder einbaubar sein.

Zur Warenabnehmer-ldentifikationsprüfung in der Zentrale kann insbesondere ein endgerätintern implementierter Code und/oder ein am Endgerät abgefragter Code und/oder ein von einer in das Endgerät eingeschobenen Karte ausgelesener Code überprüft werden.

Zur Warenanbieter-ldentifikation kann insbesondere die Endgeräts-Position in der Zentrale verwendet werden. Diese Endgerätsposition des Endgerätes kann vom Endgerät durch GPS und/oder ein internes Routing-Verfahren (beispielsweise mit einer internen digitalen Karte unter Berücksichtigung von Lenkradstellung und/oder Geschwindigkeit bzw. Kilometerzähler des Fahrzeuges) bestimmt werden. Ferner kann die Bestimmung der Position eines Endgerätes aufgrund einer Mobilfunkzelle oder Basisstation, über welches dieses Endgerät über einen Kommunikationskanal in Form eines Mobilfunknetzes mit der Zentrale kommuniziert, bestimmt werden. Damit ist insbesondere die Identifikation einer bestimmten Tankstelle möglich. Die Identifikation einer bestimmten Zapfsäule dieser Tankstelle kann in unterschiedlicher Weise erfolgen: So ist es möglich, vom Warenabnehmer an die Zentrale Warendaten, beispielsweise die Menge abgenommenen Treibstoffs, zu übertragen und von der Zentrale entweder diese Daten an die Tankstelle zu übermitteln, wo aufgrund der Warendaten eine bestimmte Zapfsäule identifiziert werden kann oder stattdessen in der Zentrale von der Tankstelle aktuelle Warendaten, also beispielsweise von einzelnen Zapfsäulen abgegebene Warenmengen, zu übermitteln und in der Zentrale hierdurch die Zapfsäule zu identifizieren. Ferner kann eine Zapfsäule durch Abfragen einer Zapfsäulen-Identifikation, wie beispielsweise einer Nummer auf der Zapfsäule vom Endgerät erfolgen. Des weiteren kann in einem Lesegerät, insbesondere einem Barcode-Lesegerät, welches mit dem Endgerät im Fahrzeug in Verbindung steht, eine Identifikation der Zapfsäule, insbesondere ein Barcode an der Zapfsäule oder am Zapfhahn, eingelesen werden; ferner können Warenanbieter-ldentifikationsdaten und/oder Warendaten von der Tankstelle, insbesondere von der Zapfsäule der Tankstelle an das Endgerät per Infrarot, Funk etc. übermittelt werden.

Die Warendaten können vom Warenanbieter und/oder vom Warenabnehmer an die Zentrale übermittelt werden.

Zur Bestätigung des Vorgangs kann dem Endgerät des Warenabnehmers von der Zentrale eine Quittierung mit Warendaten übermittelt werden. Auch dem Warenanbieter kann eine Quittierung von der Zentrale mit Warendaten, eine Warenabnehmer-ldentifikation und evt. weiteren Daten übermittelt werden, um den Erfolg des Bezahlungsvorganges beim Warenanbieter überprüfbar zu machen.

Ein erfindungsgemäßes Endgerät kann insbesondere in einem Telematik-Endgerät, insbesondere für oder in einem Fahrzeug, ausgebildet sein.

Weitere Merkmale und Vorteile der Erfindung ergeben sich aus der nachfolgenden Beschreibung eines Ausführungsbeispiels anhand der Zeichnung. Dabei zeigt:

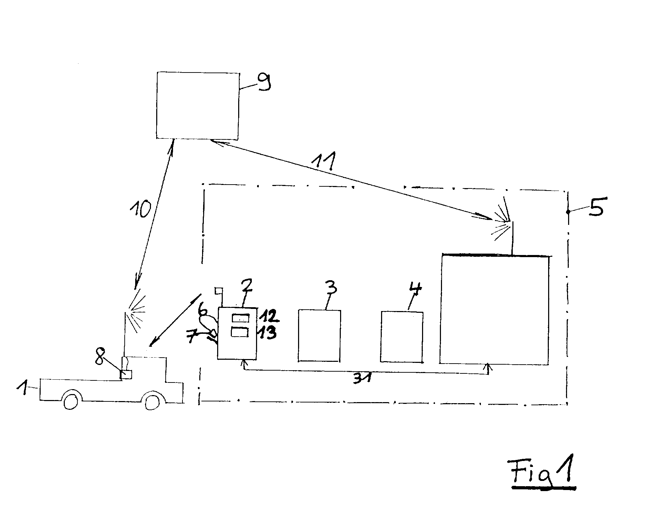

- Fig. 1: schematisch ein an einer Zapfsäule einer Tankstelle tankendes, mit
- Fig. 2: einer Zentrale kommunizierendes Fahrzeug und als Flußdiagramm eine Ausgestaltung des Verfahrens zur Identifikation.

Figur zeigt ein Kraftfahrzeug 1, welches von einer 2 von mehreren Zapfsäulen 2 bis 4 an einer Tankstelle Kfz-Treibstoff, also Benzin oder Diesel, über den Schlauch 6 oder Zapfhahn 7 der Zapfsäule 2 getankt hat, worauf die Identität des Kraftfahzeuges 1 und/oder eines darin eingebauten Endgerätes 8 und/oder des Kraftfahrzeughalters zusammen mit der Identität der Tankstelle 5, insbesondere der Zapfsäule 2 in einer Zentrale 9 zur Ermöglichung der Abrechnung des abgenommenen Treibstoffs erfaßt werden soll, wofür ein Kommunikationskanal 10 zwischen dem Endgerät 8 und der Zentrale 9 sowie ein Kommunikationskanal 11 zwischen der Zentrale 9 und der Tankstelle 5 verwendet werden.

Zur Abrechnung soll die Identität des Endgeräts 8 und der Tankstelle 5, von welcher das Fahrzeug 1, in welchem das Endgerät 8 eingebaut ist, Treibstoff erhalten hat, direkt oder implizit die Warenmenge, also die Treibstoffmenge und/oder der Preis erfaßt werden.

Die ldentifkation des Warenabnehmers kann nach Übermittlung eines im Endgerät intern implementierten Codes und/oder eines am Endgerät abgefragten Codes und/oder eines am Endgerät von einer in das Endgerät eingeschobenen Karte ausgelesenen Codes oder dgl. vom Endgerät an die Zentrale geprüft werden.

Die Warenanbieter-ldentifikation, also die Identifikation der Tankstelle 5 sowie überdies ggf. der Zapfsäule 2 der Tankstelle 5 (= Warenanbieter) und/oder der abgenommenen Treibstoffmenge und/oder deren Preis (also der Warendaten) kann ebenfalls in unterschiedlicher Weise erfolgen: Vom Endgerät 8 kann zusammen mit der Warenabnehmer-ldentifikation (beispielsweise der Endgeräte-Nummer) eine Warenanbieter-ldentifikation (= Identifikation der Tankstelle) und/oder Warendaten (also die Nummern der Zapfsäule oder die von dieser getankten Treibstoffmenge oder der Treibstoffpreis) über den Kommunikationskanal 10 an die Zentrale 9 übermittelt werden. Hierzu kann am Endgerät eine beispielsweise auf der Zapfsäule 2 sichtbar angebrachte Zapfsäulen-Nummer und/oder die an einer Anzeige 12 angezeigte Treibstoffmenge und/oder der von einer Anzeige 13 angezeigte Gesamtpreis über eine Tastatur etc. abgefragt werden und/oder von der Zapfsäule 2 über Infrarot, Funk oder dgl. die Identität der Zapfsäule 2 an das Endgerät 8 übermittelt werden und/oder beispielsweise von einem Lasergerät, wie einem Barcode-Laser am Fahrzeug die Identität der Zapfsäule 2 von einem Barcode an der Zapfsäule 2 oder an deren Zapfhahn oder Schlauch abgelesen und vom Endgerät an die Zentrale übermittelt werden. Aufgrund der Identifikation der einzelnen Zapfsäule kann auch die Tankstelle 5 in der Zentrale bestimmt werden. Zusätzlich oder stattdessen kann in der Zentrale aufgrund der Identifikation einer einzelnen Zapfsäule der Preis des vom Fahrzeug 1 abgenommenen Kraftstoffs (also weitere Warendaten) ermittelt werden. Warendaten können stattdessen oder zusätzlich auch am Endgerät über eine Tastatur etc. abgefragt werden oder von der Zapfsäule 2 an das Endgerät per Funk, Infrarot oder dgl. übermittelt werden. Ferner können Warendaten auch durch die Zentrale 9 über den Kommunikationskanal 11 von der durch die Warenanbieter-ldentifikation vom Endgerät über den Kommunikationskanal 10 identifizierten Tankstelle 5 (= Warenanbieter) abgefragt werden, insbesondere unter Angabe der vom Endgerät an die Zentrale übermittelten Nummer der Zapfsäule 2.

Stattdessen oder zusätzlich ist eine Identifikation der Tankstelle 5 (also des Warenanbieters) aufgrund des Ortes des Endgerätes 8 möglich. Der Ort des Endgerätes 8 kann von diesem per GPS bestimmt werden. Stattdessen oder zusätzlich ist eine Ortsbestimmung über fahrzeuginternes Routing, z.B. anhand einer endgerät-internen Straßenkarte, des Lenkradauschlages und der Fahrzeuggeschwindigkeit, möglich. Eine GPS-Ortsbestimmung ist heute auf etwa 5 m genau möglich. Stattdessen oder zusätzlich kann auch eine grobe Ortsbestimmung des Endgerätes 8 erfolgen, wenn dieses als Kommunikationskanal 10 ein Mobilfunknetz benutzt, indem die Funkzelle oder Basisstation, welche das Endgerät 8 benutzt, von der Zentrale bzw. vom Mobilfunknetzbetreiber identifiziert werden; dies ist insbesondere auch zur Lokalisierung eines entwendeten Endgerätes 8 bzw. Kraftfahrzeugs 1 vorteilhaft.

Aufgrund des Ortes des Endgerätes kann die Tankstelle 5, also der Warenanbieter, identifiziert werden. Dies ist insbesondere bei GPS sehr genau möglich.

Als Kommunikationskanal kann insbesondere ein Mobilfunknetz verwendet werden. Dies kann insbesondere ein GSM-Mobilfunknetz sein. Die Daten können z.B. als GSM-SMS oder wie ein herkömmliches Mobilfunk-Gespräch übertragen werden.

In der Zentrale 9 wird die Identität des Warenabnehmers geprüft. Ferner wird dessen Berechtigung, also beispielsweise dessen Kontostand oder Kreditlimit geprüft. Die abgenommenen Waren werden entweder in der Zentrale, in der von der Zentrale informierten Tankstelle oder in einer von der Zentrale 9 informierten Abrechnungszentrale abgerechnet.

Das Endgerät 8 im Fahrzeug 1 erhält über den Kommunikationskanal 10 von der Zentrale 9 eine Quittierung; diese umfaßt den Preis der abgenommenen Kraftstoffmenge (Warendaten) und die Warenanbieter-ldentifikation (also die Tankstelle); ferner kann sie weitere Daten, wie Ort, Zeit, Datum, Kraftstoffmenge usw. umfassen. An die Tankstelle 5 werden von der Zentrale 9 über den Kommunikationskanal 11 Daten über eine erfolgreiche Abrechnung übertragen. Dies kann bei Abrechnung in der Zentrale 9 beispielsweise nur eine Quittung sein. Insbesondere bei Abrechnung in der Tankstelle 5 kann eine Endgeräts-ldentifikation und evtl. Berechtigung des Endgerätes mitübertragen werden. Als Kommunikationskanal 11 zwischen der Zentrale 9 und der Tankstelle 5 kann das Festnetz oder das Mobilfunknetz verwendet werden.

Das Endgerät 8 kann insbesondere im Fahrzeug eingebaut oder einbaubar sein. Es umfaßt einen Speicher für ein Programm zur Durchführung des erfindungsgemäßen Verfahrens, einen Prozessor zum Abarbeiten des Programms, ein Kommunikationsmodul zum Kommunizieren des Endgerätes über den Kommunikationskanal 10 mit der Zentrale 9 und eine Eingabeeinrichtung (wie beispielsweise eine Tastatur) zum Abfragen der Kraftstoffmenge (Warendaten) und/oder der Zapfsäulen-Nummer (verwendbar als Warendaten oder Warenanbieter-ldentifikationsdaten) und/oder ein Kommunikationsmodul zum Kommunizieren mit dem Warenanbieter. Das Kommunikationsmodul zum Kommunizieren mit dem Warenanbieter kann insbesondere ein Infrarot- oder Funkempfänger sein, über welchen eine Identität einer bestimmten Zapfsäule 2 abgefragt werden kann; das Eingabegerät kann eine Tastatur oder beispielsweise ein Lesegerät, wie ein Barcode-Lesegerät zum Einlesen eines Barcodes von einer Zapfsäule, insbesondere von deren Schlauch 6 oder Zapfhahn 7 zur Identifikation der Zapfsäule 2 (als Warendaten und/oder Warenanbieter-ldentifikation) sein.

In der Zentrale ist ein Speicher mit einem Programm zur Durchführung des erfindungsgemäßen Verfahrens, ein Prozessor zum Abarbeiten dieses Programms und ein Kommunikationsmodul zum Kommunizieren über den Kommunikationskanal 10 mit dem Endgerät 8 vorgesehen; das Kommunikationsmodul zum Kommunizieren mit dem Endgerät 8 kann auch zum Kommunizieren mit dem Warenanbieter (Tankstelle 5) verwendet werden; auch ist es möglich, in der Zentrale 9 ein Kommunikationsmodul zum Kommunizieren mit dem Endgerät 8 und ein eigenes Kommunikationsmodul zum Kommunizieren mit dem Warenanbieter (Tankstelle 5) zu verwenden und vorzusehen. In der Zentrale 9 können von dieser bediente Tankstellen mit ihren Telefonnummern zum Kommunizieren über den Kommunikationskanal 11 gespeichert sein. Ferner können Tabellen von Endgeräten 8, deren Berechtigung zum Abnehmen von Waren, deren Codes etc. abgespeichert sein. Falls die Identifikation einer Zapfsäule vom Endgerät abgefragt oder eingelesen und an die Zentrale übertragen wird, sind in der Zentrale 9 Zuordnungen dieser Identifikation von Zapfsäulen 2 zu Tankstellen 5 zweckmäßig.

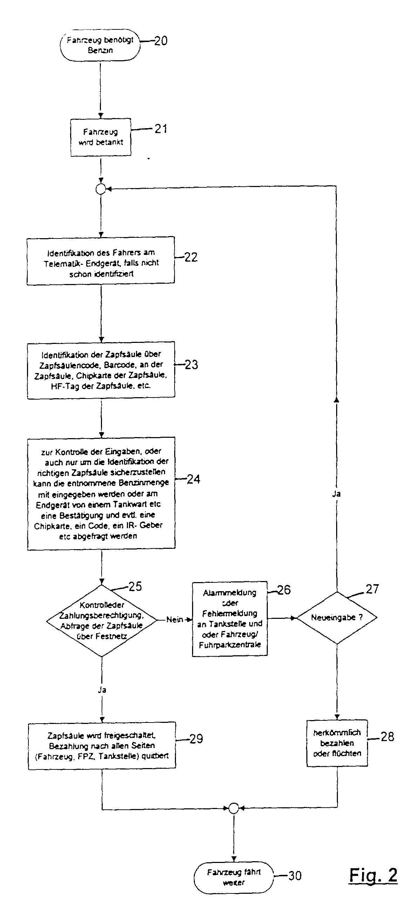

Figur 2 zeigt als Flußdiagramm den Ablauf eines Tankvorgangs und eines erfindungsgemäßen Verfahrens. Ein Fahrzeug, welches Benzin benötigt (Situation 20), wird mit Treibstoff (also Waren) betankt im Schritt 21. Hierauf identifiziert sich im Schritt 22 der Fahrer an seinem Telematik-Endgerät, von welchem beispielsweise über eine Tastatur ein Code abgefragt werden kann, oder er ist dort bereits durch frühere Abspeicherung seiner Identität und/oder eines Codes identifiziert. Im Schritt 23 erfolgt die Identifikation der Zapfsäule beispielsweise über einen Zapfsäulencode, Barcode an der Zapfsäule, eine Chipkarte der Zapfsäule, ein Funksignal (HF-Teg) durch Infrarot etc., wobei durch die Identifikation der Zapfsäule die Tankstelle der Zapfsäule (also der Warenanbieter) und/oder der Treibstoffpreis (also Warendaten) direkt oder implizit bestimmbar sind.

Zur Kontrolle kann im Schritt 24 im Endgerät beispielsweise die entnommene Treibstoffmenge über eine Tastatur etc. abgefragt werden oder eine Identifizierung der Tankstelle, beispielsweise durch Abfrage einer Pin-Nummer, einer Chipkarte, durch Empfang eines IR- oder HF-Signals etc., abgefragt werden. In der Zentrale kann im Schritt 25 die Zahlungsfähigkeit eines sich bei der Zentrale über einen Kommunikationskanal identifizierenden Endgerätes bzw. des Endgerät-Besitzers geprüft werden; dabei kann insbesondere geprüft werden, ob für den Besitzer des Endgerätes ein Konto besteht, ob auf diesem ein Guthaben vorliegt oder ob der Kreditrahmen überschritten wurde. Ferner wird von der Zentrale die Zapfsäule, also deren Tankstelle, die an der Zapfsäule getankte Warenmenge und/oder der Preis abgefragt. Im Falle eines Fehlers wird im Schritt 26 von der Zentrale eine Alarmmeldung an die Tankstelle und/oder an das Endgerät des Fahrzeuges ausgegeben; im Schritt 27 wird abgefragt, ob eine erneute Eingabe am Endgerät gewünscht wird. Falls ja, wird mit Schritt 22 fortgefahren, falls nein, ist das Verfahren beendet, und der Fahrer kann entweder herkömmlich in einem Kassenraum der Tankstelle etc. bezahlen oder ohne zu bezahlen flüchten im Schritt 28. Falls im Schritt 25 die Kontrolle in der Zentrale positiv ausfällt, wird im Schritt 29 die Zapfsäule der Tankstelle freigeschaltet, also deren Zähler auf Null gesetzt durch Übermittlung eines entsprechenden Signals von der Zentrale an die Tankstelle und von dieser an (31) die Zapfsäule oder durch Übermittlung eines Signals von der Zentrale über das Endgerät und Infrarot, Funk etc. an die Zapfsäule. Ferner erfolgt eine Quittierung an das Fahrzeug, in welchem sich das Endgerät befindet, an die Tankstelle der Zapfsäule und/oder an einen Fahrzeugpark-Eigentümer, welcher für das Fahrzeug und für andere Fahrzeuge die Abrechnung benötigt. Hiermit ist das Verfahren beendet. Im Schritt 30 kann das Fahrzeug weiterfahren.

## Patentansprüche

1. Verfahren zur Identifikation eines Waren von einem Warenanbieter (5) entgegennehmenden Warenabnehmers (1) mit einem Endgerät (8) und zur Identifikation des Warenanbieters (5),
wobei über einen Kommunikationskanal (10) vom Endgerät (8) an eine Zentrale (9) zumindest eine Warenabnehmer-ldentifikation (1) betreffende Warenabnehmer-ldentifikations-Daten und eine Warenanbieter-ldentifikation (5) betreffende Warenanbieter-ldentifikations-Daten übermittelt werden,
wobei die Warenabnehmer-ldentifkations-Daten in einer Zentrale (9) geprüft werden und
wobei die Warenabnehmer-ldentifikations-Daten und die entgegengenommenen oder unmittelbar hierauf entgegenzunehmenden Waren betreffende Warendaten in der Zentrale einander zugeordnet werden.

2. Verfahren nach Anspruch 1,
dadurch gekennzeichnet,
daß die zugeordneten Warenabnehmer-Identifikations-Daten und Warendaten in der Zentrale gespeichert werden.

3. Verfahren nach Anspruch 1 oder 2;
dadurch gekennzeichnet,
daß die Warenabnehmer-ldentifikations-Daten und Warendaten an den Warenanbieter (5) und/oder eine Abrechnungszentrale übermittelt werden.

4. Verfahren nach einem der vorhergehenden Ansprüche,
dadurch gekennzeichnet,
daß der Warenabnehmer (1) ein Fahrzeug oder Fahrzeughalter, der Warenanbieter (5) eine Tankstelle und die Ware Kraftfahrzeug-Treibstoff ist.

5. Verfahren nach einem der vorhergehenden Ansprüche,
dadurch gekennzeichnet,
daß die Warenabnehmer-ldentifikation das Endgerät identifiziert.

6. Verfahren nach einem der vorhergehenden Ansprüche,
dadurch gekennzeichnet,
daß die Warenabnehmer-ldentifikation ein Kraftfahrzeug (1), in welchem sich das Endgerät (8) befindet, identifiziert.

7. Verfahren nach einem der vorhergehenden Ansprüche,
dadurch gekennzeichnet,
daß die Warenabnehmer-ldentifikation den Halter des Kraftfahrzeuges, in welchem sich das Endgerät (8) befindet, identifiziert.

8. Verfahren nach einem der vorhergehenden Ansprüche,
dadurch gekennzeichnet,
daß zur Warenabnehmer-ldentifikations-Prüfung in der Zentrale ein vom Endgerät übermittelter (10) endgeräts-intern implementierter Code geprüft wird.

9. Verfahren nach einem der vorhergehenden Ansprüche,
dadurch gekennzeichnet,
daß zur Warenabnehmer-Identifikations-Prüfung in der Zentrale ein am Endgerät (8) abgefragter Code geprüft wird.

10. Verfahren nach einem der vorhergehenden Ansprüche,
dadurch gekennzeichnet,
daß zur Warenabnehmer-ldentifikations-Prüfung in der Zentrale ein am Endgerät von einer in das Endgerät eingeschobenen Karte ausgelesener Code geprüft wird.

11. Verfahren nach einem der vorhergehenden Ansprüche,
dadurch gekennzeichnet,
daß die Warenanbieter-ldentifikation unter Berücksichtigung einer vom Endgerät (8) bestimmten, an die Zentrale (9) übermittelten (10) Endgerätsposition in der Zentrale erfolgt.

12. Verfahren nach Anspruch 11,
dadurch gekennzeichnet,
daß die Endgerätsposition vom Endgerät per GSM und/oder internem Routing und/oder von der Zentrale (9) oder einer Mobilfunkzentrale durch die vom Endgerät zur Übermittlung (10) benutzte Funkzelle oder Basisstation bestimmt wird.

13. Verfahren nach einem der vorhergehenden Ansprüche,
dadurch gekennzeichnet,
daß die Warenanbieter-Identifikation die Identifikation einer Tankstelle (5) erfaßt.

14. Verfahren nach einem der vorhergehenden Ansprüche,
dadurch gekennzeichnet,
daß die Zapfsäule und/oder Treibstoffmenge durch ein mit dem Endgerät (8) verbundenes Lesegerät, insbesondere einen Barcode-Leser, erfaßt werden.

15. Verfahren nach einem der vorhergehenden Ansprüche,
dadurch gekennzeichnet,
daß zur Zapfsäulen-Identifikation (2) die getankte Treibstoffmenge repräsentierende Warendaten oder/und eine Zapfsäule bezeichnende Warendaten vom Endgerät (8) an die Zentrale (9) übermittelt (10) werden.

16. Verfahren nach einem der vorhergehenden Ansprüche,
dadurch gekennzeichnet,
daß die Treibstoffmenge oder den Preis bezeichnende Warendaten und/oder eine Zapfsäule (2) bezeichnende Warendaten von der Zapfsäule (2) an das Endgerät (8), insbesondere per Infrarot oder Funk übermittelt werden.

17. Verfahren nach einem der vorhergehenden Ansprüche,
dadurch gekennzeichnet,
daß Warendaten vom Warenanbieter (5) an die Zentrale übermittelt werden.

18. Verfahren nach einem der vorhergehenden Ansprüche,
dadurch gekennzeichnet,
daß Warendaten vom Endgerät (8) an die Zentrale (9) übermittelt werden.

19. Verfahren nach einem der vorhergehenden Ansprüche,
dadurch gekennzeichnet,
daß im Endgerät (8) des Warenabnehmers (1) von der Zentrale (9) eine Quittierung mit Warendaten und/oder die Tankstelle (5) bezeichnenden Warenabnehmer-ldentifikations-Daten übermittelt wird.

20. Verfahren nach einem der vorhergehenden Ansprüche,
dadurch gekennzeichnet,
daß dem Warenanbieter (5) von der Zentrale (9) eine Quittierung zumindest mit Warendaten und einer Warenabnehmer-ldentifikation (1,2) übermittelt wird.

21. Endgerät, insbesondere Telematik-Endgerät,
mit einem Programm zur Durchführung des Verfahrens nach einem der vorhergehenenden Ansprüche, mit einem Speicher für das Programm, mit einem Prozessor zum Abarbeiten des Programms, mit einem Kommunikationsmodul zum Kommunizieren (10) mit der Zentrale und einer Eingabe-Einrichtung und/oder mit einem Kommunikationsmodul zum Kommunizieren mit dem Warenanbieter (5).

22. Endgerät nach Anspruch 21,
dadurch gekennzeichnet,
daß es ein Funkmodul zum Empfangen von Warenanbieter-ldentifikations-Daten vom Warenanbieter (5), insbesondere von einer Zapfsäule (2), aufweist.

23. Endgerät nach Anspruch 21 oder 22,
dadurch gekennzeichnet,
daß es ein Infrarot-Modul zum Empfang von Warenanbieter-ldentifikations-Daten (2;5) vom Warenanbieter, insbesondere von einer Zapfsäule des Warenanbieters, aufweist.

24. Zentrale mit einem Programm zur Durchführung des Verfahrens nach einem der Ansprüche 1 bis 20, mit einem Speicher für das Programm, mit einem Prozessor zum Abarbeiten des Programms und mit einem Kommunikationsmodul zum Kommunizieren (10) mit dem Endgerät (8).

25. Zentrale nach Anspruch 24,
dadurch gekennzeichnet,
daß ein Kommunikationsmodul in der Zentrale zum Kommunizieren mit dem Warenanbieter (5) vorgesehen ist.

26. Zentrale nach einem der Ansprüche 24 oder 25,
dadurch gekennzeichnet,
daß in der Zentrale Telefonnummern von Warenanbietern zum Kommunizieren über den Kommunikationskanal (11) gespeichert sind.

27. Endgerät und/oder Zentrale nach einem der Ansprüche 21 bis 26,
dadurch gekennzeichnet,
daß als Kommunikationsmodul ein Mobilfunkgerät, insbesondere nach GSM-Standard vorgesehen ist.
